# EUROPEAN PATENT APPLICATION

(11) **EP 4 693 908 A1**
(43) Date of publication of application: **11.02.2026**
(21) Application number: 24192816.7
(22) Date of filing: 05.08.2024
(51) Int. Cl.: H04B 1/10, H04B 1/12

(54) **AMPLITUDE-MODULATED SIGNAL PROCESSING METHOD AND RECEIVER FOR AN AMPLITUDE-MODULATED SIGNAL**

(71) Applicant: NXP B.V., 5656 AG Eindhoven (NL)
(72) Inventor: Macours, Christophe Marc, 5656AG Eindhoven (NL)
(74) Representative: Miles, John Richard

(57) **Abstract**

A method of processing an amplitude-modulated (AM) radio signal and an AM radio receiver is described. An AM radio signal is demodulated to provide an in-phase demodulated signal and a quadrature demodulated signal. Noise reduction is applied to the in-phase demodulated signal based on a noise reference signal. If a carrier for the AM radio signal is present the noise reference signal is the quadrature demodulated signal, otherwise the noise reference signal is the in-phase demodulated signal.

## Description

### FIELD

This disclosure relates to a method and receiver for processing an amplitude-modulated (AM) radio signal.

### BACKGROUND

Many vehicles include radios or infotainment systems for AM radio reception which is still a widely available radio medium particularly for larger countries such as US and Japan. The radio reception quality may degrade due to interference sources which may be external environmental conditions or sources within the vehicle, such as interference generated by the motor in electric vehicles (EVs).

### SUMMARY

Aspects of the disclosure are defined in the accompany claims. In a first aspect, there is provided method of processing an amplitude-modulated, AM, radio signal, the method comprising: receiving an input signal comprising an AM radio signal; applying demodulation to the input signal to provide an in-phase demodulated signal and a quadrature demodulated signal; providing an output signal by applying noise reduction to the in-phase demodulated signal based on a noise reference signal; determining whether a carrier for the AM radio signal is present in the input signal; and wherein in response to the carrier being present, the noise reference signal is the quadrature demodulated signal and in response to the carrier being absent, the noise reference signal is the in-phase demodulated signal.

In some embodiments, providing an output signal by applying noise reduction to the in-phase demodulated signal based on a noise reference signal further comprises spectrally subtracting the noise reference signal from the in-phase demodulated signal. In some embodiments, providing an output signal by applying noise reduction to the in-phase demodulated signal based on a noise reference signal further comprises applying time-domain pulse-blanking by detecting pulses in the noise reference signal and blanking the in-phase demodulated signal at a corresponding time of each pulse. In some embodiments, providing an output signal by applying noise reduction to the in-phase demodulated signal based on a noise reference signal further comprises applying time-domain noise gating by tracking a noise floor energy level of the noise reference signal and applying gain reduction to the in-phase demodulated signal when the energy level of the in-phase demodulated signal corresponds to the noise floor energy level.

In some embodiments, spectrally subtracting the noise reference signal from the in-phase demodulated signal further comprises: providing a frequency domain in-phase demodulated signal by converting the in-phase demodulated signal from a time domain to a frequency domain; determining an in-phase demodulated signal magnitude and an in-phase demodulated signal phase from the frequency domain in-phase demodulated signal; converting the noise reference signal from the time domain to the frequency domain; providing a frequency domain noise reference signal by determining a noise reference signal magnitude from the frequency domain noise reference signal; and providing a processed in-phase demodulated signal magnitude by reducing the magnitude of the in-phase demodulated signal magnitude dependent on the noise reference signal magnitude.

In some embodiments, providing a processed in-phase demodulated signal magnitude comprises subtracting the noise reference signal magnitude from the in-phase demodulated signal magnitude. In some embodiments, providing the output signal further comprises converting the processed in-phase demodulated signal magnitude and the in-phase demodulated signal phase from the frequency domain to the time domain.

In some embodiments, applying demodulation to the input signal further comprises: determining a received signal strength indication value of the input signal; and dependent on the received signal strength indication value, either (i) applying synchronous quadrature demodulation to the input signal to provide the in-phase demodulated signal and the quadrature demodulated signal, or (ii) applying envelope detection to the input signal to provide the in-phase demodulated signal and generating a pseudo-quadrature signal to provide the quadrature demodulated signal.

In some embodiments, the method further comprises (i) comparing the received signal strength indication value to a first signal strength value; and (ii) in response to the received signal strength indication value being greater than or equal to the first signal strength value, applying synchronous demodulation to the input signal.

In some embodiments, the method further comprises: (i) comparing the received signal strength indication value to a second signal strength value; and (ii) in response to the received signal strength indication value being less than or equal to the second signal strength value, applying envelope detection to the input signal to provide the in-phase demodulated signal and generating a pseudo-quadrature signal to provide the quadrature demodulated signal, wherein the second signal strength value is less than or equal to the first signal strength value.

In a second aspect, there is defined an amplitude-modulated (AM) radio signal receiver comprising: a demodulator having a receiver input configured to receive an input signal comprising an AM radio signal, an in-phase output configured to output an in-phase demodulated signal and a quadrature output configured to output a quadrature demodulated signal; a noise reduction filter having a signal input coupled to the in-phase output, a noise reference input configured to receive a noise reference signal and further configured to output a processed output signal by applying noise reduction to the in-phase demodulated signal; a controller configured to receive the input signal and further configured to: determine whether a carrier for the AM radio signal is present in the input signal; switchably couple the noise reference input to the in-phase output in response to the carrier not being present; and switchably couple the noise reference input to the quadrature output in response to the carrier being present.

In some embodiments, the noise reduction filter is configured to spectrally subtract the noise reference signal from the in-phase demodulated signal. In some embodiments, the noise reduction filter is configured to apply time-domain pulse-blanking by detecting pulses in the noise reference signal and blanking the in-phase demodulated signal at the corresponding time of each pulse. In some embodiments, the noise reduction filter is configured to apply time-domain noise gating by tracking a noise floor energy level of the noise reference signal and applying gain reduction to the in-phase demodulated signal when the energy level of the in-phase demodulated signal corresponds to the noise floor energy level.

In some embodiments, The AM receiver further comprises a spectral subtractor including: an in-phase Fast Fourier Transform, FFT, module configured to receive the in-phase demodulated signal and output a frequency domain in-phase demodulated signal; a complex-to-magnitude-and-phase module configured to receive the frequency domain in-phase demodulated signal and to output an in-phase demodulated signal magnitude and an in-phase demodulated signal phase; a noise reference Fast Fourier Transform, FFT, module configured to receive the noise reference signal and output a frequency domain noise reference signal; a complex-to-magnitude module configured to receive the frequency domain noise reference signal and to output a noise reference signal magnitude; and a gain controller configured to receive the in-phase demodulated signal magnitude, the noise reference signal and having a control output configured to control a gain of a variable gain module, the variable gain module configured to process the magnitude of the in-phase demodulated signal magnitude dependent on the noise reference signal magnitude. In some embodiments, the spectral subtractor further comprises an inverse FFT module configured to receive the processed in-phase demodulated signal magnitude and the in-phase demodulated signal phase and to output the processed output signal.

In some embodiments, the demodulator is further configured to: determine a received signal strength indication value of the input signal; and dependent on the received signal strength indication value, either (i) applying synchronous quadrature demodulation to the input signal to provide the in-phase demodulated signal and the quadrature demodulated signal, or (ii) applying envelope detection to the input signal to provide the in-phase demodulated signal and generating a pseudo-quadrature signal to provide the quadrature demodulated signal. In some embodiments, the demodulator is further configured to: (i) compare the received signal strength indication value to a first signal strength value; and (ii) in response to the received signal strength indication value being greater than or equal to the first signal strength value, applying synchronous demodulation to the received input signal.

In some embodiments, the demodulator is further configured to: (i) compare the received signal strength indication value to a second signal strength value; and (ii) in response to the received signal strength indication value being less than or equal to the second signal strength value, apply envelope detection to the received input signal to provide the in-phase demodulated signal and generate a pseudo-quadrature signal, wherein the second signal strength value is less than or equal to the first signal strength value.

In a third aspect, there is provided a non-transitory computer readable media comprising a computer program comprising computer executable instructions which, when executed by a computer, causes the computer to perform a method of processing an amplitude-modulated, AM, radio signal, the method comprising: receiving an input signal comprising an AM radio signal; applying demodulation to the input signal to provide an in-phase demodulated signal and a quadrature demodulated signal; providing an output signal by applying noise reduction to the in-phase demodulated signal based on a noise reference signal; determining whether a carrier for the AM radio signal is present in the input signal; and wherein in response to the carrier being present, the noise reference signal is the quadrature demodulated signal and in response to the carrier being absent, the noise reference signal is the in-phase demodulated signal.

### BRIEF DESCRIPTION OF THE DRAWINGS

In the figures and description like reference numerals refer to like features. Embodiments are now described in detail, by way of example only, illustrated by the accompanying drawings in which:
Figure 1 Shows an example AM receiver with noise reduction.
Figure 2 Illustrates an example synchronous demodulator.
Figure 3 shows an example AM noise reduction filter.
Figure 4 Shows an example AM receiver with noise reduction using demodulator configured for weak signal conditions.
Figure 5 shows an example time-domain plot of the demodulator output using the demodulator configured as illustrated in figure 4.
Figure 6 shows an example spectrogram of the demodulator output of the AM receiver of figure 4 corresponding to the time-domain plot of figure 5.
Figure 7 shows an example spectrogram of the output of the noise filter of figure corresponding to the spectrogram of figure 6.
Figure 8 shows an AM receiver with noise reduction according to an embodiment.
Figure 9 shows a method of AM radio reception according to an embodiment.
Figure 10 shows a method of AM radio reception according to an embodiment.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### DETAILED DESCRIPTION OF EMBODIMENTS

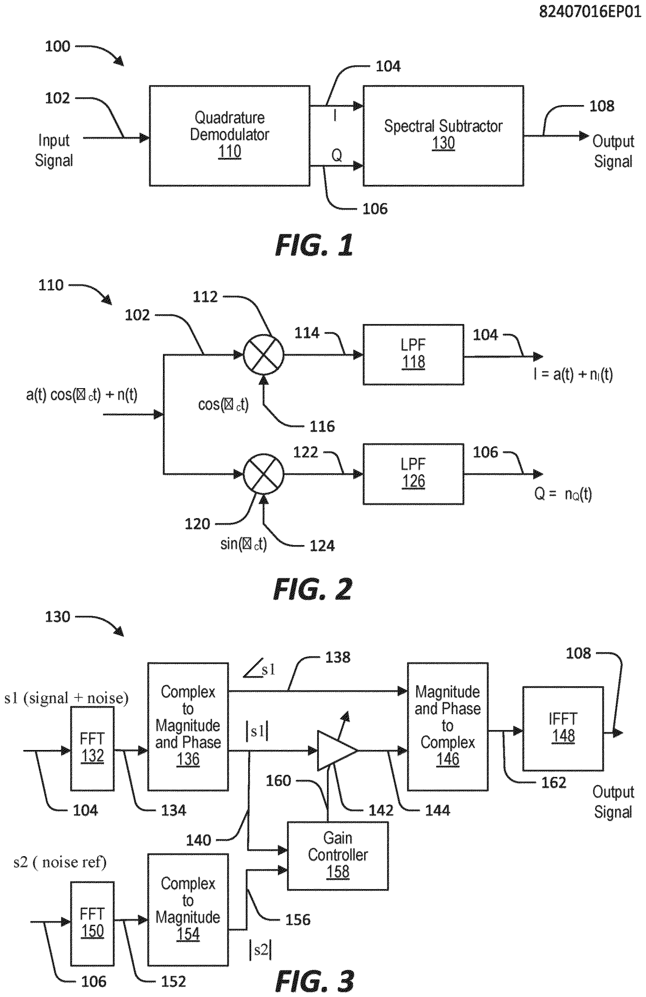

Figure 1 shows an example AM receiver 100 with noise reduction. The AM receiver 100 includes a quadrature demodulator 110 which receives a RF input signal on receiver input 102. The demodulator 110 performs synchronous demodulation of the received signal and outputs an in-phase (I) demodulated signal component on I-output 104 and a quadrature (Q) demodulated signal component on Q-output 106. The spectral subtractor 130 receives the I signal and Q signal and performs spectral subtraction of the two signals to de-noise the desired signal. The Q-signal is used as the noise reference and the I-signal is assumed to consist of the desired signal together with additional noise. The resulting de-noised signal is then output on the receiver output 108. For the AM receiver 100, AM demodulation is performed by means of synchronous demodulation. In order for the de-noising to work correctly, the quadrature signal should not contain any in-phase signal component and the spatio-temporal properties of the noise in the in-phase and quadrature signals should be quasi-identical.

Figure 2 shows an example implementation of a synchronous quadrature demodulator 110 which may be implemented by analog circuitry, digital circuitry or a combination of hardware and software. An input signal a(t) cos(ω_{c}t) + n(t) is received on the receiver input where a(t) is the broadcast signal, cos(ω_{c}t) is the carrier signal, and n(t) is noise. The I signal is generated using in-phase mixer 112 which mixes the signal with a local oscillator signal received at the local oscillator input 116. The local oscillator signal is a signal at the carrier frequency cos(ω_{c}t) phase-locked to the input signal. The mixed signal is output on in-phase mixer output 114 and filtered by the in-phase low pass filter 118 which has an output connected to the I-output 104. The resulting signal I = a(t) + n_{I}(t) where a(t) is the desired signal and n_{I}(t) is the in-phase noise component.

Similarly, the Q signal is generated using in-phase mixer 120 which mixes the signal with a local oscillator signal received at the local oscillator input 124. The local oscillator signal is a signal at the carrier frequency sin(ω_{c}t) i.e. phase-shifted with respect to the to the in-phase local oscillator signal. The mixed signal is output on quadrature mixer output 122 and filtered by the quadrature low pass filter 126 which has an output connected to the Q-output 106. The resulting signal Q = n_{Q}(t) where n_{Q}(t) is the quadrature noise component used as the noise reference signal by the spectral subtractor 130.

Figure 3 shows an example implementation of a digital spectral subtractor 130 which may be implemented in hardware or a combination of hardware and software. The I-output 104 provides the I-signal (signal s1) and is connected to an in-phase Fast-Fourier Transform (FFT) module 132 which converts the I-signal to the frequency domain. The resulting frequency domain in-phase signal is output on FFT module output 134. The frequency domain in-phase signal which may be represented as a complex number is input to complex-to-magnitude-and-phase module 136 which determines the magnitude and phase of the signal s₁. The magnitude of s₁ is output on magnitude output 140. The phase of s1 is output on phase output 138. The Q-output 106 provides the Q-signal (signal s₂) and is connected to a quadrature Fast-Fourier Transform (FFT) module 150 which converts the Q-signal to the frequency domain. The resulting frequency domain quadrature signal is output on FFT module output 152. The frequency domain quadrature signal which may be represented as a complex number is input to complex-to-magnitude module 154 which determines the magnitude of the signal s₂. The magnitude of s₂ is output on magnitude output 156. The gain controller 158 has inputs connected to the magnitude outputs 140, 156 and has a control output 160 to adjust the gain of variable gain module 142 dependent on the magnitudes of s1 and s2. The variable gain module 142 has an input connected to the magnitude output 140 and an output connected to a magnitude input 144 of a magnitude-and-phase to complex converter module 146. The variable gain element 142 may alter the magnitude of s1 so that the output value is for example |s1| - |s2|. The magnitude-and-phase to complex converter module 146 receives the adjusted in-phase signal magnitude and the s1 phase and converts back to a complex representation on output 162. An inverse FFT module 148 then converts the signal back to the time-domain and outputs the processed output signal on the receiver output 108.

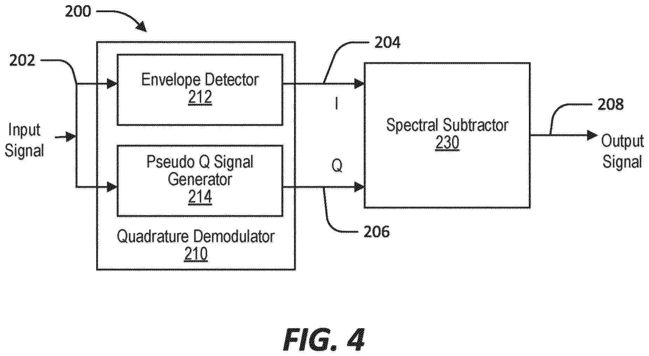

Figure 4 shows an example AM receiver 200 configured for weak reception conditions. The AM receiver 200 includes a quadrature demodulator 210 which receives a RF input signal on receiver input 202. The demodulator 210 performs demodulation of the received signal and outputs an in-phase (I) demodulated signal component on I-output 204 by envelope detection using envelope detector 212 and a quadrature (Q) demodulated signal component on Q-output 206 by using a pseudo-Q signal generator 214. The pseudo-Q signal generator 214 may output a "pseudo-Q" signal for example by locking the local oscillator to its last reliable settings or tracking the phase rotation introduced by the frequency offset of the carrier. This may maintain acceptable performance of the spectral subtraction.

The spectral subtractor 230 receives the I signal and Q signal and performs spectral subtraction of the two signals to de-noise the desired signal. The spectral subtractor may be implemented for example by spectral subtractor 130. The Q-signal is used as the noise reference and the I-signal is assumed to consist of the desired signal together with additional noise. The resulting de-noised signal is then output on the receiver output 208.

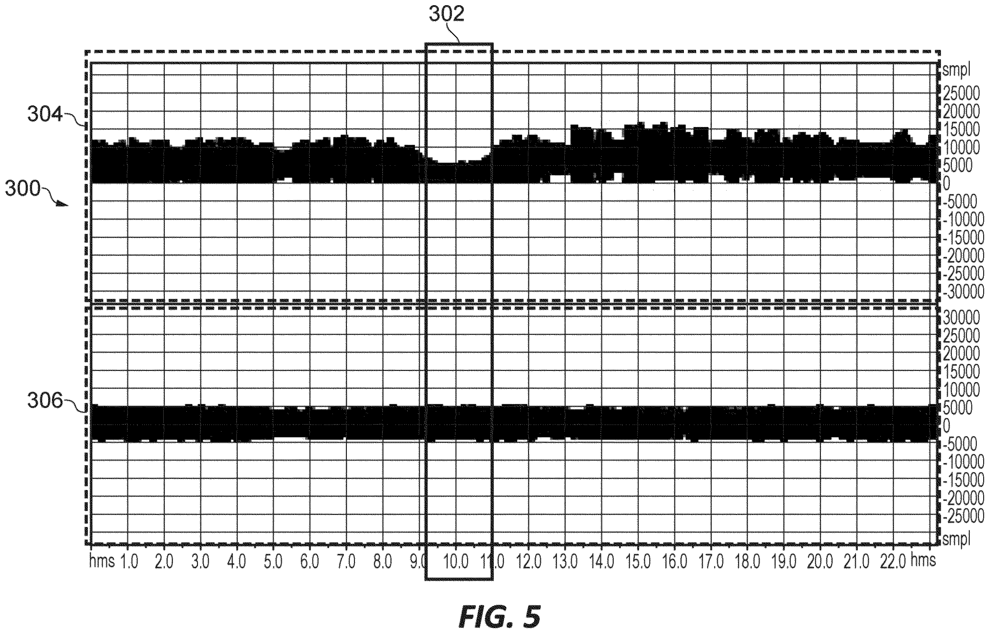

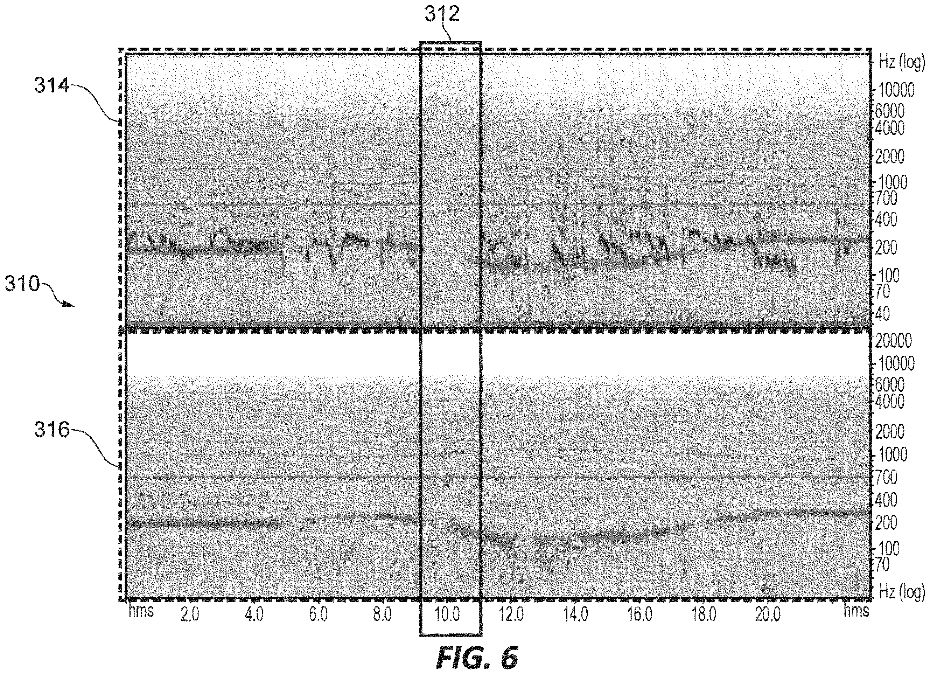

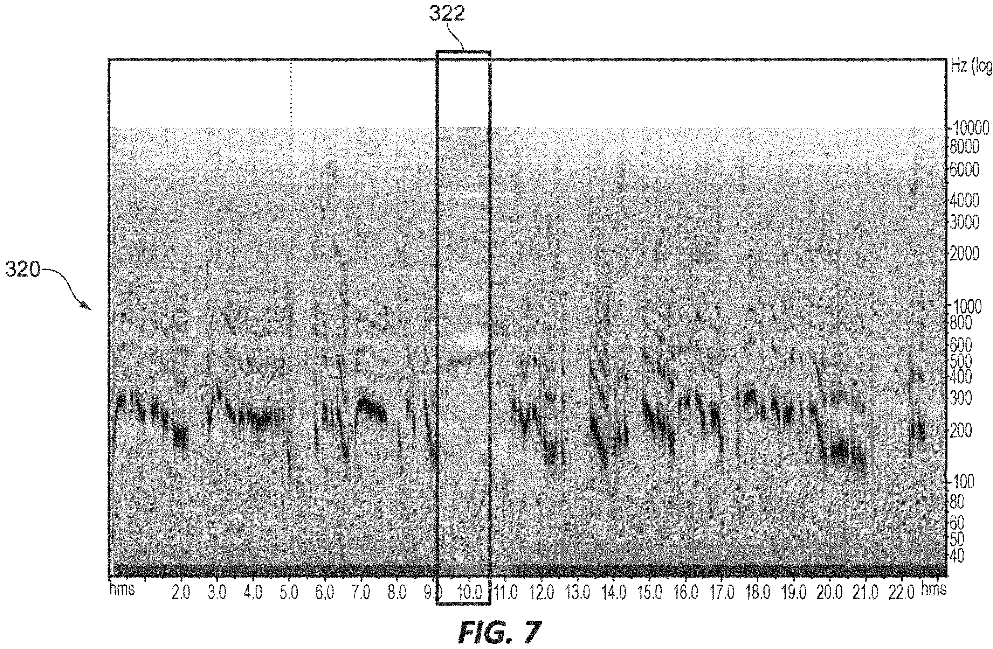

In some cases, the carrier is completely absent from the antenna signal which may occur for an AM receiver in a vehicle if for example a vehicle enters a tunnel, In such case, the complex antenna signal only contains noise. Since there is no carrier, the signal will have no DC offset, consequently the noise has a zero mean and its negative sample values will be rectified by the envelope detector 212. As a result, the pseudo-Q signal spectrum will no longer match the envelope detector spectrum output and the spectral subtraction will not be effective as illustrated in the example waveforms shown in Figures 5, 6 and 7. Figure 5 shows an example time-domain plot 300 of the demodulator output waveforms of the envelope detector output 304 (top) and the pseudo-Q signal 306 (bottom). Figure 6 shows the corresponding spectrograms 310 of the envelope detector output 314 (top) and the pseudo-Q signal 316 (bottom). Figure 7 shows the output spectrum 320 of the spectral subtraction.

Up to a time of approximately 10 seconds, the DC offset of the carrier prevents negative clipping (rectification) of the signal by the envelope detector 212, therefore the noise spectrum of the noise contained in the envelope detector output matches with the noise spectrum of the pseudo-Q signal and the spectral subtraction performs as expected.

At around 10 seconds as illustrated in regions 302, 312, 322, the vehicle passes under a bridge and the AM carrier disappears. In this case, the input signal only contains noise. Because of the envelope detector, the noise in the audio output is rectified , which results in a different frequency spectrum than in the pseudo-Q signal (region 312), and the spectral subtraction fails to suppress the noise ( region 322).

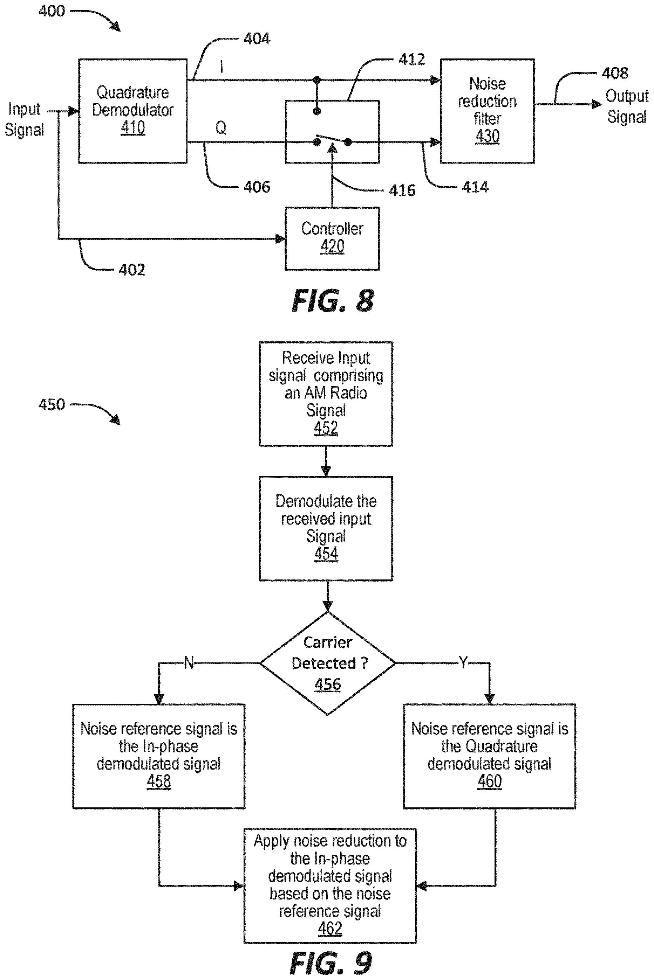

Figure 8 shows an AM receiver 400 for a vehicle according to an embodiment. The AM receiver 400 includes a quadrature demodulator 410 which receives a RF input signal on receiver input 402. The demodulator 410 performs demodulation of the received signal and outputs an in-phase (I) demodulated signal component on I-output 404 and a quadrature (Q) demodulated signal component on Q-output 406. The demodulator 410 may use both synchronous demodulation as shown for demodulator 110 and demodulation using envelope detection and pseudo-Q signal generation as shown in demodulator 210. The choice of demodulation is dependent on a received signal strength indication which may by determining, by the demodulator 410, the noise level based on the Q signal, or a measurement of the signal-to-noise ratio or some other means. A controller 420 has an input connected to the receiver input 402 and performs carrier detection on the input signal using known techniques. For example, carrier detection may be based on a measurement of signal strength similarly to reception quality assessment but with tighter thresholds. In one example, the carrier signal may be considered to be no longer present when the signal strengths of the in-phase and quadrature signals are equal. Other carrier detection techniques for AM signals may also be used. A switch 412 which is connected to the I-output 404 and Q-output 406 may be controlled by the control output 416 of the controller 420 to route either the in-phase-signal or quadrature signal to the noise reference input 414 of a noise reduction filter 430 dependent on whether the controller 420 detects a carrier in the input signal. If no carrier is detected, the I-signal is connected to the noise reference input 414, otherwise the Q-signal is connected to the noise reference input 414. The noise reduction filter 430 has a signal input connected to the I-output 404. The Q-signal is used as the noise reference and the I-signal is assumed to consist of the desired signal together with additional noise. The resulting de-noised signal is then output on the receiver output 408. The noise reduction filter 430 may apply noise reduction based on the input signal and noise reference using spectral subtraction as shown for receivers 100, 200. Alternatively, or in addition, time-domain pulse blanking, or time-domain noise gating of the signal may be used. The AM receiver 400 may be implemented by a combination of analog and digital hardware, software or a combination of software and hardware.

Figure 9 shows a method for processing an amplitude-modulated (AM) radio signal 450 according to an embodiment. In step 452 an input signal is received comprising an AM radio signal. In step 454 the input signal is demodulated to provide an in-phase demodulated signal and quadrature demodulated signal. In step 456, the method may check whether a carrier has been detected. If a carrier has been detected, then in step 460, a noise reference signal is the quadrature demodulated signal, otherwise in step 458 the noise reference signal is the quadrature demodulated signal. Following on from either of steps 458 or 460, the method applies noise reduction to the in-phase demodulated signal based on the noise reference signal (step 462) by for example one or more of spectral subtraction, time-domain pulse blanking and time-domain noise gating. The resulting processed signal is then output from the receiver.

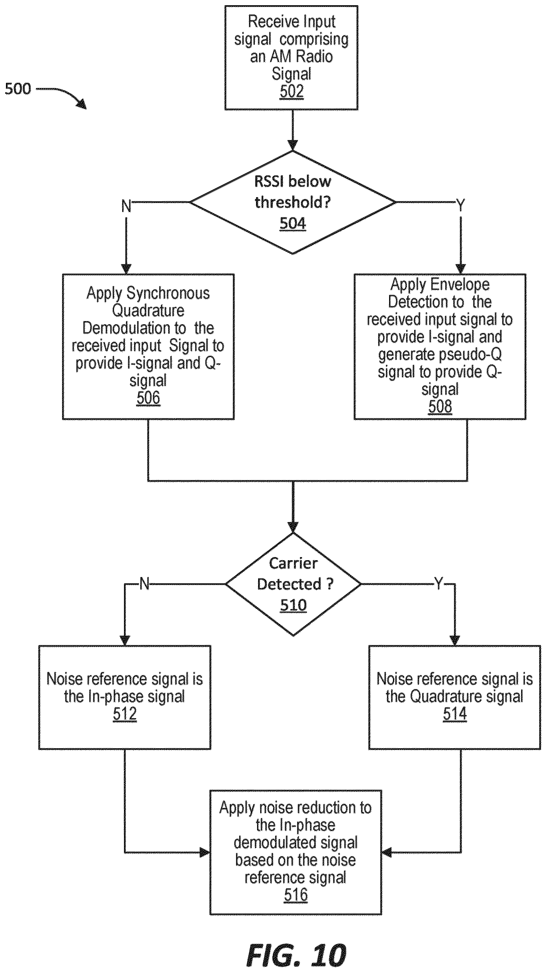

Figure 10 shows a method for processing an amplitude-modulated (AM) radio signal 500 according to an embodiment. In step 502 an input signal is received comprising an AM radio signal. In step 504 a signal strength indication is compared to a threshold. If the signal strength is not below a threshold value, synchronous quadrature demodulation is applied to the received input signal to provide an in-phase demodulated signal and quadrature demodulated signal (step 506). If the signal strength is below a threshold, envelope detection is applied to the received input signal to provide an in-phase demodulated signal and a pseudo-Q signal is generated to provide a quadrature demodulated signal (step 508). Following form either steps 506 or 508, in step 510, the method may check whether a carrier has been detected. If a carrier has been detected, then in step 514, a noise reference signal is the quadrature demodulated signal, otherwise in step 512 the noise reference signal is the in-phase signal. Following on from either of steps 512 or 514, the method applies noise reduction to the in-phase demodulated signal based on the noise reference signal (step 516) by for example spectral subtraction, time-domain pulse blanking, or time-domain noise gating. The resulting processed signal is then output from the receiver.

Applying time-domain pulse-blanking may be done by detecting pulses in the noise reference signal and blanking the in-phase demodulated signal at the corresponding time of each pulse. Applying time-domain noise gating may be done by tracking the noise floor energy level of the noise reference signal and applying gain reduction to the in-phase demodulated signal when the energy level of the in-phase demodulated signal corresponds to the noise floor energy level.

Methods 450, 500 may be implemented in hardware, software or combination of hardware and software. In some examples the methods 450, 500 may be implemented as part of a software-defined radio.

The AM receiver 400 and methods 450, 500 allow for robust denoising of demodulated AM radio signals in carrier-less reception conditions. In the case where no AM carrier is detected, the demodulated in-phase signal is used as noise reference for the spectral subtraction instead of the quadrature projection of the complex AM signal. This ensures a consistent audio denoising performance independent of the antenna reception conditions.

By denoising the output signal by itself using the same spectral subtraction settings including but not limited to time constant values and maximum attenuation value, the noise reduction may maintain its performance regardless of the presence of a carrier which may ensure a consistent listening experience. The demodulation scheme may also vary depending on the signal strength which may also ensure a consistent listening experience under a variety of reception conditions.

A method of processing an amplitude-modulated (AM) radio signal and an AM radio receiver is described. An AM radio signal is demodulated to provide an in-phase demodulated signal and a quadrature demodulated signal. Noise reduction is applied to the in-phase demodulated signal based on a noise reference signal. If a carrier for the AM radio signal is present the noise reference signal is the quadrature demodulated signal, otherwise the noise reference signal is the in-phase demodulated signal

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A method of processing an amplitude-modulated, AM, radio signal, the method comprising:
receiving an input signal comprising an AM radio signal;
applying demodulation to the input signal to provide an in-phase demodulated signal and a quadrature demodulated signal;
providing an output signal by applying noise reduction to the in-phase demodulated signal based on a noise reference signal;
determining whether a carrier for the AM radio signal is present in the input signal; and
wherein in response to the carrier being present, the noise reference signal is the quadrature demodulated signal and in response to the carrier being absent, the noise reference signal is the in-phase demodulated signal.

2. The method of claim 1, wherein providing an output signal by applying noise reduction to the in-phase demodulated signal based on a noise reference signal further comprises spectrally subtracting the noise reference signal from the in-phase demodulated signal.

3. The method of claim 1, wherein providing an output signal by applying noise reduction to the in-phase demodulated signal based on a noise reference signal further comprises applying time-domain pulse-blanking by detecting pulses in the noise reference signal and blanking the in-phase demodulated signal at a corresponding time of each pulse.

4. The method of claim 1, wherein providing an output signal by applying noise reduction to the in-phase demodulated signal based on a noise reference signal further comprises applying time-domain noise gating by tracking a noise floor energy level of the noise reference signal and applying gain reduction to the in-phase demodulated signal when the energy level of the in-phase demodulated signal corresponds to the noise floor energy level.

5. The method of claim 2, wherein spectrally subtracting the noise reference signal from the in-phase demodulated signal further comprises:
providing a frequency domain in-phase demodulated signal by converting the in-phase demodulated signal from a time domain to a frequency domain;
determining an in-phase demodulated signal magnitude and an in-phase demodulated signal phase from the frequency domain in-phase demodulated signal;
converting the noise reference signal from the time domain to the frequency domain;
providing a frequency domain noise reference signal by determining a noise reference signal magnitude from the frequency domain noise reference signal; and
providing a processed in-phase demodulated signal magnitude by reducing the magnitude of the in-phase demodulated signal magnitude dependent on the noise reference signal magnitude.

6. The method of claim 5, wherein providing the processed in-phase demodulated signal magnitude comprises subtracting the noise reference signal magnitude from the in-phase demodulated signal magnitude.

7. The method of claim 5 or 6, wherein providing the output signal further comprises converting the processed in-phase demodulated signal magnitude and the in-phase demodulated signal phase from the frequency domain to the time domain.

8. The method of any preceding claim, wherein applying demodulation to the input signal further comprises:
determining a received signal strength indication value of the input signal; and
dependent on the received signal strength indication value, either
(i) applying synchronous quadrature demodulation to the input signal to provide the in-phase demodulated signal and the quadrature demodulated signal, or
(ii) applying envelope detection to the input signal to provide the in-phase demodulated signal and generating a pseudo-quadrature signal to provide the quadrature demodulated signal.

9. The method of claim 8, further comprising:
(i) comparing the received signal strength indication value to a first signal strength value; and
(ii) in response to the received signal strength indication value being greater than or equal to the first signal strength value, applying synchronous demodulation to the input signal.

10. The method of claim 9, further comprising:
(i) comparing the received signal strength indication value to a second signal strength value; and
(ii) in response to the received signal strength indication value being less than or equal to the second signal strength value, applying envelope detection to the input signal to provide the in-phase demodulated signal and generating a pseudo-quadrature signal to provide the quadrature demodulated signal, wherein the second signal strength value is less than or equal to the first signal strength value.

11. An amplitude-modulated (AM) radio signal receiver comprising:
a demodulator having a receiver input configured to receive an input signal comprising an AM radio signal, an in-phase output configured to output an in-phase demodulated signal and a quadrature output configured to output a quadrature demodulated signal;
a noise reduction filter having a signal input coupled to the in-phase output, a noise reference input configured to receive a noise reference signal and further configured to output a processed output signal by applying noise reduction to the in-phase demodulated signal;
a controller configured to receive the input signal and further configured to:
determine whether a carrier for the AM radio signal is present in the input signal;
switchably couple the noise reference input to the in-phase output in response to the carrier not being present; and
switchably couple the noise reference input to the quadrature output in response to the carrier being present.

12. The AM receiver of claim 11, wherein the noise reduction filter is configured to spectrally subtract the noise reference signal from the in-phase demodulated signal.

13. The AM receiver of claim 11 or 12, wherein the noise reduction filter is configured to apply time-domain pulse-blanking by detecting pulses in the noise reference signal and blanking the in-phase demodulated signal at the corresponding time of each pulse.

14. The AM receiver of any of claims 11 to 13, wherein the noise reduction filter is configured to apply time-domain noise gating by tracking a noise floor energy level of the noise reference signal and applying gain reduction to the in-phase demodulated signal when the energy level of the in-phase demodulated signal corresponds to the noise floor energy level.

15. The AM receiver of claim 12 further comprising a spectral subtractor including:
an in-phase Fast Fourier Transform, FFT, module configured to receive the in-phase demodulated signal and output a frequency domain in-phase demodulated signal;
a complex-to-magnitude-and-phase module configured to receive the frequency domain in-phase demodulated signal and to output an in-phase demodulated signal magnitude and an in-phase demodulated signal phase;
a noise reference Fast Fourier Transform, FFT, module configured to receive the noise reference signal and output a frequency domain noise reference signal;
a complex-to-magnitude module configured to receive the frequency domain noise reference signal and to output a noise reference signal magnitude; and
a gain controller configured to receive the in-phase demodulated signal magnitude, the noise reference signal and having a control output configured to control a gain of a variable gain module, the variable gain module configured to process the magnitude of the in-phase demodulated signal magnitude dependent on the noise reference signal magnitude.

## Amended claims

### Amended claims in accordance with Rule 137(2) EPC.

1. A method (450) of processing an amplitude-modulated, AM, radio signal, the method comprising:
receiving (452) an input signal comprising an AM radio signal;
applying demodulation (454) to the input signal to provide an in-phase demodulated signal and a quadrature demodulated signal;
providing an output signal (462) by applying noise reduction to the in-phase demodulated signal based on a noise reference signal;
determining (456) whether a carrier for the AM radio signal is present in the input signal; and
wherein in response to the carrier being present, the noise reference signal is the quadrature demodulated signal (460) and in response to the carrier being absent, the noise reference signal is the in-phase demodulated signal (458).

2. The method (450) of claim 1, wherein providing an output signal by applying noise reduction to the in-phase demodulated signal based on a noise reference signal further comprises spectrally subtracting the noise reference signal from the in-phase demodulated signal.

3. The method (450) of claim 1, wherein providing an output signal by applying noise reduction to the in-phase demodulated signal based on a noise reference signal further comprises applying time-domain pulse-blanking by detecting pulses in the noise reference signal and blanking the in-phase demodulated signal at a corresponding time of each pulse.

4. The method (450) of claim 1, wherein providing an output signal by applying noise reduction to the in-phase demodulated signal based on a noise reference signal further comprises applying time-domain noise gating by tracking a noise floor energy level of the noise reference signal and applying gain reduction to the in-phase demodulated signal when the energy level of the in-phase demodulated signal corresponds to the noise floor energy level.

5. The method (450) of claim 2, wherein spectrally subtracting the noise reference signal from the in-phase demodulated signal further comprises:
providing a frequency domain in-phase demodulated signal by converting the in-phase demodulated signal from a time domain to a frequency domain;
determining an in-phase demodulated signal magnitude and an in-phase demodulated signal phase from the frequency domain in-phase demodulated signal;
converting the noise reference signal from the time domain to the frequency domain;
providing a frequency domain noise reference signal by determining a noise reference signal magnitude from the frequency domain noise reference signal; and
providing a processed in-phase demodulated signal magnitude by reducing the magnitude of the in-phase demodulated signal magnitude dependent on the noise reference signal magnitude.

6. The method (450) of claim 5, wherein providing the processed in-phase demodulated signal magnitude comprises subtracting the noise reference signal magnitude from the in-phase demodulated signal magnitude.

7. The method (450) of claim 5 or 6, wherein providing the output signal further comprises converting the processed in-phase demodulated signal magnitude and the in-phase demodulated signal phase from the frequency domain to the time domain.

8. The method (500) of any preceding claim, wherein applying demodulation to the input signal further comprises:
determining (504) a received signal strength indication value of the input signal; and
dependent on the received signal strength indication value, either
(i) applying synchronous quadrature demodulation (506) to the input signal to provide the in-phase demodulated signal and the quadrature demodulated signal, or
(ii) applying envelope detection (508) to the input signal to provide the in-phase demodulated signal and generating a pseudo-quadrature signal to provide the quadrature demodulated signal.

9. The method (500) of claim 8, further comprising:
(i) comparing the received signal strength indication value to a first signal strength value; and
(ii) in response to the received signal strength indication value being greater than or equal to the first signal strength value, applying synchronous demodulation to the input signal.

10. The method (500) of claim 9, further comprising:
(i) comparing the received signal strength indication value to a second signal strength value; and
(ii) in response to the received signal strength indication value being less than or equal to the second signal strength value, applying envelope detection to the input signal to provide the in-phase demodulated signal and generating a pseudo-quadrature signal to provide the quadrature demodulated signal, wherein the second signal strength value is less than or equal to the first signal strength value.

11. An amplitude-modulated, AM, radio signal receiver (400) comprising:
a demodulator (410) having a receiver input (402) configured to receive an input signal comprising an AM radio signal, an in-phase output (404) configured to output an in-phase demodulated signal and a quadrature output (406) configured to output a quadrature demodulated signal;
a noise reduction filter (430) having a signal input coupled to the in-phase output, a noise reference input (414) configured to receive a noise reference signal, the noise reduction filter (430) being further configured to output (408) a processed output signal by applying noise reduction to the in-phase demodulated signal;
a controller (420) configured to receive the input signal and further configured to:
determine whether a carrier for the AM radio signal is present in the input signal; switchably couple the noise reference input to the in-phase output in response to the carrier not being present; and
switchably couple the noise reference input to the quadrature output in response to the carrier being present.

12. The AM receiver (400) of claim 11, wherein the noise reduction filter (430) is configured to spectrally subtract the noise reference signal from the in-phase demodulated signal.

13. The AM receiver (400) of claim 11 or 12, wherein the noise reduction filter (430) is configured to apply time-domain pulse-blanking by detecting pulses in the noise reference signal and blanking the in-phase demodulated signal at the corresponding time of each pulse.

14. The AM receiver (400) of any of claims 11 to 13, wherein the noise reduction filter (430) is configured to apply time-domain noise gating by tracking a noise floor energy level of the noise reference signal and applying gain reduction to the in-phase demodulated signal when the energy level of the in-phase demodulated signal corresponds to the noise floor energy level.

15. The AM receiver (400) of claim 12 further comprising a spectral subtractor (130) including:
an in-phase Fast Fourier Transform, FFT, module (132) configured to receive the in-phase demodulated signal (s1) and output a frequency domain in-phase demodulated signal;
a complex-to-magnitude-and-phase module (146) configured to receive the frequency domain in-phase demodulated signal and to output an in-phase demodulated signal magnitude and an in-phase demodulated signal phase;
a noise reference Fast Fourier Transform, FFT, module (150) configured to receive the noise reference signal (s2) and output a frequency domain noise reference signal;
a complex-to-magnitude module (154) configured to receive the frequency domain noise reference signal and to output a noise reference signal magnitude; and
a gain controller (158) configured to receive the in-phase demodulated signal magnitude, the noise reference signal and having a control output configured to control a gain of a variable gain module, the variable gain module configured to process the magnitude of the in-phase demodulated signal magnitude dependent on the noise reference signal magnitude.
